# EUROPÄISCHE PATENTANMELDUNG

(11) **EP 3 026 388 A1**
(43) Veröffentlichungstag der Anmeldung: **01.06.2016**
(21) Anmeldenummer: 15192792.8
(22) Anmeldetag: 03.11.2015
(51) Int. Cl.: F28F 13/00, F25B 35/04

(54) **VERDAMPFER**

(30) Priorität: 26.11.2014 DE 102014224137
(71) Anmelder: Vaillant GmbH, 42859 Remscheid (DE)
(72) Erfinder: Spahn, Hans-Josef, 40699 Erkrath (DE); Szuder, Thomas-Friedrich, 51379 Leverkusen (DE); Salg, Frank, 42897 Remscheid (DE)
(74) Vertreter: Hocker, Thomas

(57) **Zusammenfassung**

Bei einem Leitungsförmiger Wärmetauscher (1), insbesondere Verdampfer-Wärmetauscher zum Verdampfen eines außerhalb des leitungsförmigen Wärmetauschers (1) befindlichen ersten Fluids (3) mittels eines in dem leitungsförmigen Wärmetauscher (1) strömenden zweiten Fluid (4), ist der leitungsförmige Wärmetauscher (1) von einer Pulverbeschichtung (2) umgeben.

## Beschreibung

Die Erfindung bezieht sich auf einen Wärmetauscher, insbesondere Verdampfer einer Adsorptionswärmepumpe oder thermischen Kühlung.

Bei Adsorptionswärmepumpen befinden sich ein Adsorber/Desorber und ein Verdampfer-Kondensator-Wärmetauscher in einem abgeschlossenen Behälter. Ein Kältemittel wird im Adsorptionsprozess am Boden des Behälters mittels des Verdampfer-Wärmetauschers verdampft und vom Adsorber aufgenommen. In der Desorptionsphase agiert der Adsorber als Desorber. Das Kältemittel wird im Desorber desorbiert und kondensiert am Kondensator-Wärmetauscher, wodurch es sich unten im Behälter sammelt. Während des Verdampfungsprozesses muss der Verdampfer-Wärmetauscher in Kontakt mit dem Kältemittel treten.

Bei bekannten derartigen Wärmetauschern liegt eine Rohrschlange auf deren Rippen auf dem Boden eines Vakuumbehälters auf. Dadurch ergibt sich jedoch der Nachteil nur sehr kleiner Auflageflächen der Rippen und damit bei gefluteter Komponente eine kleine Wärmetauschfläche für den Verdampfer und Kondensator, besonders bei geringer Kältemittelmenge.

Aus DE 10033972 B4 ist eine Variante bekannt, bei welcher die Rippen des Rippenrohres entlang einer Sehne abgeflacht sind und das Rippenrohr auf dieser Abflachung der Rippen auf der Platte aufliegt. Hierdurch kommt eine größere Rippenfläche bei geringem Füllstand in Berührung mit dem Kältemittel.

Nachteilig ist, dass die obere Hälfte des Verdampfers in der Regel nicht in Kontakt mit dem Kältemittel tritt und somit nur über Wärmeleitung zur Unterseite an der Verdampfung beteiligt ist. Der Verdampfer weist eine füllstandsabhängige Leistungscharakteristik auf.

Ziel der Erfindung ist es, die Nachteile des Standes der Technik zu vermeiden und einen Wärmetauscher der eingangs erwähnten Art vorzuschlagen, bei dem für die Verdampfung eine große Fläche Wärme auf das Kältemittel übertragen kann.

Erfindungsgemäß wird dies dadurch gelöst, dass ein leitungsförmiger Wärmetauscher von einer Pulverbeschichtung umgeben ist. Hierdurch vergrößert sich einerseits die Oberfläche. Andererseits wird hierdurch auch bei geringem Füllstand der gesamte überzogene Wärmetauscher mit zu verdampfendem Fluid benetzt, so dass sich die aktive Verdampferfläche erhöht.

Vorteilhafte Ausgestaltungen ergeben sich durch die Merkmale der abhängigen Ansprüche.

So hat sich neben einer Edelstahl-Beschichtung eine keramische Beschichtung mit Silizium-Carbid-Pulver als besonders vorteilhaft herausgestellt.

Die Beschichtung kann nicht nur auf Glattrohren, sondern auch auf Lamellenrohre sowie Wellrohren angewendet werden.

Die Erfindung wird nun anhand der Zeichnung näher erläutert. Dabei zeigen:
Fig. 1 einen erfindungsgemäßen Wärmetauscher sowie
Fig. 2 einen erfindungsgemäßen Wärmetauscher in einem Behälter mit einem zu verdampfendem Fluid.

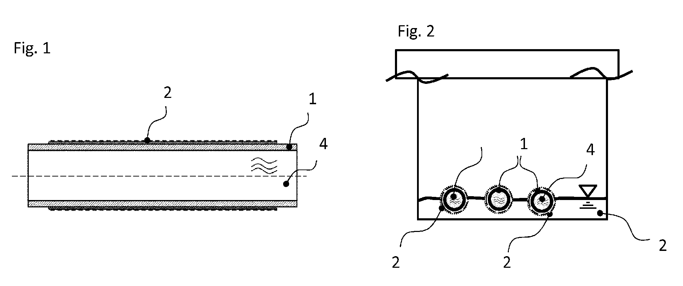

Figur 1 zeigt einen leitungsförmigen Wärmetauscher 1 mit einer dieser stoffschlüssig umgebenen Edelstahl-Pulverbeschichtung 2. Figur 2 zeigt im Schnitt diesen leitungsförmigen Wärmetauscher 1 mit einer diesen stoffschlüssig umgebenen Edelstahl-Pulverbeschichtung 2 in Form eines Halbkreises in einem Behälter 5; hierbei kann es sich um ein Modul einer Adsorptionswärmepumpe oder einer solaren Kühlungsanlage handeln, in dem sich außer dem Kältemittel keine weiteren Gase oder Flüssigkeiten befinden. Im Folgenden wird ein Modul einer Adsorptionswärmepumpe mit dem erfindungsgemäßen leitungsförmigen Wärmetauscher 1 beschrieben. Die Erfindung beschränkt sich jedoch nicht auf diesen Anwendungsfall.

Der leitungsförmige Wärmetauscher 1 mit der Edelstahl-Pulverbeschichtung 2 ist auf dem Boden des Behälters 5 angeordnet. Auf dem Boden des Behälters 5 befindet sich ebenfalls Kältemittel 3 als erstes Fluid. Ein Teil des leitungsförmigen Wärmetauschers 1 befindet sich im Flüssigkeitsspiegel des Kältemittels 3. Innerhalb des leitungsförmigen Wärmetauschers 1 strömt ein zweites Fluid 4.

In der Verdampfungsphase strömt das zweite Fluid 4 durch den leitungsförmigen Wärmetauscher 1. Das Kältemittel 3 unterhalb des Flüssigkeitsspiegels wird über die Kapillarwirkung der Edelstahl-Pulverbeschichtung 2 in die gesamte Edelstahl-Pulverbeschichtung 2 gezogen und dort von der Wärme des zweiten Fluids 4 erwärmt und verdampft. Hierbei dient die gesamte Oberfläche der Edelstahl-Pulverbeschichtung 2 als Wärmeübertrageroberfläche. Wird Kältemittel 3, das sich oberhalb des Flüssigkeitsspiegels in der Edelstahl-Pulverbeschichtung 2 befindet, verdampft, so trocknet die Edelstahl-Pulverbeschichtung 2 hierdurch; durch den Kapillareffekt strömt Kältemittel 3 von unten in die Edelstahl-Pulverbeschichtung 2 nach, so dass der Prozess kontinuierlich stattfinden kann.

Bei der Edelstahl-Pulverbeschichtung 2 handelt es sich um ein Pulver mit Silizium-Carbid-Anteilen. Der leitungsförmige Wärmetauscher 1 wird hierbei im thermischen Plasmaspritzverfahren beschichtet. Hierzu wird Pulver mit Überschallgeschwindigkeit in eine Hochtemperatur-Gasflamme eingedüst und während der Flugphase bis zum Substrat aufgeschmolzen beziehungsweise angeschmolzen. Auf der Substratoberfläche zerspringen die Pulvertropfen zu pfannkuchenartigen Gebilden. Sie bilden in Abhängigkeit von der Pulvermenge (Schichtdicke) mehr oder weniger stark zerklüftete und poröse Schichten auf dem Substrat. Die Beschichtung hat einen oberflächenvergrößernden Effekt. Die poröse Struktur ermöglicht eine kapillare Wirksamkeit, so dass im vorliegenden Anwendungsfall Kältemittel 3 unterhalb des Flüssigkeitspegels durch die Poren nach oben gezogen werden und den gesamten leitungsförmigen Wärmetauscher 1 benetzen. Daneben hat die Beschichtung eine erhöhte chemische Beständigkeit, insbesondere Korrosionsbeständigkeit und eine Erhöhung der thermischen Leitfähigkeit zur Folge.

Neben Glattrohren können auch Lamellenrohre und Wellrohre leicht im thermischen Plasmaspritzverfahren beschichtet werden. Das Rohr kann im Querschnitt rund, oval, mit zwei parallelen Wänden versehen oder auf eine andere Art gestaltet sein.

### Bezugszeichenliste

- 1: leitungsförmiger Wärmetauscher
- 2: Pulverbeschchtung
- 3: Kältemittel / erstes Fluid
- 4: zweite Fluid
- 5: Behälter

## Patentansprüche

1. Leitungsförmiger Wärmetauscher (1), insbesondere Verdampfer-Wärmetauscher zum Verdampfen eines außerhalb des leitungsförmigen Wärmetauschers (1) befindlichen ersten Fluids (3) mittels eines in dem leitungsförmigen Wärmetauscher (1) strömenden zweiten Fluid (4),
**dadurch gekennzeichnet, dass** der leitungsförmige Wärmetauscher (1) von einer Pulverbeschichtung (2) umgeben ist.

2. Leitungsförmiger Wärmetauscher (1) nach Anspruch 1, **dadurch gekennzeichnet, dass** die Pulverbeschichtung (2) eine Edelstahl-Beschichtung ist.

3. Leitungsförmiger Wärmetauscher (1) nach Anspruch 2, **dadurch gekennzeichnet, dass** die Pulverbeschichtung (2) Silizium-Carbid-Pulver enthält.

4. Leitungsförmiger Wärmetauscher (1) nach Anspruch 1 bis 3, **dadurch gekennzeichnet, dass** der leitungsförmige Wärmetauscher (1) über Lamellen verfügt oder ein Wellrohr ist.
